# EUROPÄISCHE PATENTSCHRIFT

(11) **EP 2 049 321 B1**
(45) Veröffentlichungstag und Bekanntmachung des Hinweises auf die Patenterteilung: **16.03.2011**
(21) Anmeldenummer: 07786637.4
(22) Anmeldetag: 09.08.2007
(51) Int. Cl.: B29C 49/06, B29C 49/42, B29C 45/04, B29C 45/06, B29C 49/36, B29C 49/12, B29C 49/48

(54) **SPRITZBLASMASCHINE UND VERFAHREN ZUM STRECKBLASEN VON KUNSTSTOFFBEHÄLTERN**
INJECTION BLOW MOULDING MACHINE AND PROCESS FOR THE STRETCH BLOW MOULDING OF PLASTICS CONTAINERS
MACHINE D'INJECTION-SOUFFLAGE ET PROCÉDÉ DE SOUFFLAGE-ÉTIRAGE DE RÉCIPIENTS EN MATIÈRE PLASTIQUE

(30) Priorität: 11.08.2006 DE 102006037683
(43) Veröffentlichungstag der Anmeldung: 22.04.2009
(73) Patentinhaber: Krones AG, 93073 Neutraubling (DE)
(72) Erfinder: HINTERMEIER, Martin, 93098 Mintraching (DE)
(74) Vertreter: Schuster, Thomas
(86) Internationale Anmeldenummer: PCT/EP2007/007048
(87) Internationale Veröffentlichungsnummer: WO 2008/017481

(56) Entgegenhaltungen:
- DE-A1- 19 737 697
- US-B1- 6 450 795

## Beschreibung

Die Erfindung betrifft eine Spritzblasmaschine der im Oberbegriff des Patentanspruchs 1 angegebenen Art sowie ein Verfahren der im Oberbegriff des Patentanspruchs 11 angegebenen Art.

In einer aus DE 197 37 697 A bekannnten Spritzblasmaschine sind dem Transferrotor zwei Spritzrotoren zugeordnet, die aus einem gemeinsamen Extruder mit plastifiziertem Kunststoff versorgt werden und jeweils mehrere einzelne Formnester enthalten. Die Gesamtzahl der Formnester in beiden Spritzrotoren entspricht der Anzahl der Blasformen am Blasrotor. Jeweils ein Spritzrotor wird drehangetrieben, während der andere steht. In dem stehenden Spritzrotor werden die Preforms gespritzt, während der rotierende andere Spritzrotor die fertigen Preforms einzeln über den Transferrotor an den Blasrotor übermittelt. Vor dem Transfer werden die Preforms im Spritzrotor abgekühlt. Die Temperatur bzw. Temperaturverteilung in jeder Preform kann durch Temperieren bis zum Blasvorgang konditioniert werden. Bei dem in der Spritzblasmaschine durchgeführten, einstufigen Verfahren ist die Blaszyklusdauer erheblich kürzer als die Zyklusdauer zum Herstellen und Temperieren der Preforms. Da die Gesamtanzahl der Formnester der Anzahl der Spritzformen entspricht, ist es schwierig, die Leistungsfähigkeit des Blasrotors optimal zu nutzen. Außerdem ist der Energieeinsatz für das nachträgliche Konditionieren der Preforms hoch.

In einer aus US 6 450 795 B1 bekannten Spritzblasmaschine mit Transfervorrichtungen transportieren teilbare Halsformteile Preforms und Behälter durch die Maschine.

Bei einer aus DE 31 24 523 C bekannten Spritzblasmaschine sind einem zentralen, mehrere Formnestergruppen enthaltenden Spritzrotor mit Versorgung durch einen einzigen Extruder peripher insgesamt vier Blasrotoren zum gruppenweisen Streckblasen der Behälter zugeordnet.

Aus US 3 357 046 A ist es bekannt, stationären Blasformen eine rotierende Extruderanordnung zuzuordnen, die Preforms durch Trennen von einem Strang zu bilden, und gleich mit dem späteren Behälterinhalt zu füllen und in die Behälter umzuformen.

Bei der aus DE 195 28 695 A bekannten Streckblasmaschine sind in einer Spritzstation zwei Spritzgussformeinheiten jeweils mit mehreren Formnestern relativ zu Spritzzylindern bewegbar. Die Preformgruppen werden in Richtung ihrer Längsachsen aus den Formnestern gezogen und dann quer zu Blasformgruppen transferiert. Die Preformgruppe kann mit einem mehrere Halsformteile enthaltenden Transferwerkzeug in die Blasformgruppe transferiert und in diese eingesetzt werden, oder es wird das Transferwerkzeug zwischen der Spritzgießformeinheit und den Blasformgruppen gegen ein anderes Blasform-Halsformwerkzeug für gleichzeitig mehrere Preforms gewechselt. Die fertigen Behälter werden aus den Halsform-Werkzeugen entnommen und abgeführt.

Der Erfindung liegt die Aufgabe zugrunde, eine Spritzblasmaschine und ein Verfahren zum Streckblasen von Kunststoffbehältern, insbesondere Flaschen anzugeben, mit denen kontinuierlich und einstufig ein hoher Ausstoß qualitativ hochwertiger Kunststoffbehälter erzielbar ist. Teil der Aufgabe ist es, trotz der gegenüber der

Blaszykluszeit längeren Spritzzykluszeit die mögliche Ausstoßleistung des Blasrotors optimal nutzen zu können.

Die gestellte Aufgabe wird vorrichtungstechnisch mit den Merkmalen des Patentanspruchs 1 und verfahrenstechnisch mit den Merkmalen des Patentanspruchs 11 gelöst.

Der Kunstgriff, jede Preform im Halsformteil herzustellen, im Halsformteil zu transferieren, den Kunststoffbehälter im selben Halsformteil zu bilden, und diesen auch mit dem Halsformteil zu entnehmen, und dabei die Bewegungsschritte im Wesentlichen parallel zur Arbeitsebene durchzuführen, verringert den apparativen Aufwand und stellt sicher, dass die gegebenenfalls empfindlichen Preforms und auch die Kunststoffbehälter bei Manipulationen nicht beschädigt werden. Die Halsformteile sind neben Formfunktionskomponenten auch einzelne Komponenten des Transfer- und Entnahmesystems. Obwohl in der Spritzblasmaschine die Rotoren kontinuierlich und synchron laufen, ist der Ausstoß aus Behältern aus dem Blasrotor nicht durch die längeren Spritzzykluszeiten beschränkt, sondern kann die mögliche Ausstoßleistung des Blasrotors optimal genutzt werden, da dank der Überzahl der Formnester fortlaufend so viele Preforms hergestellt werden, dass der Blasrotor mit optimaler Ausstoßleistung arbeitet. Dazu kommt, dass jede Preform relativ schnell an die Blasform transferiert wird und so eine optimale Temperatur und/oder Temperaturverteilung zum Streckblasen hat. Ferner ist die Zeitspanne zwischen der Herstellung und dem Streckblasen für jede Preform gleich lang.

Das Verfahren kann kontinuierlich ablaufen, weil die Halsformteile nicht nur eine Formfunktion beim Spritzgießen und beim Streckblasen haben, sondern auch eine Transfer- und Entnahmefunktion. Dies vereinfacht die Handhabung nach der Herstellung der Preforms und nach dem Streckblasen der Kunststoffbehälter erheblich, und resultiert in einer hohen Qualität der Preforms und der späteren Kunststoffbehälter. Trotz der kontinuierlichen Herstellung einzelner Preforms jeweils mit einer längeren Spritzzykluszeit als der Blaszykluszeit lässt sich der Blasrotor mit voller Ausstoßleistung betreiben, da die Überzahl der hergestellten Preforms den Zeitunterschied zwischen der Blaszykluszeit und der Spritzzykluszeit ausgleicht.

Bei einer zweckmäßigen Ausführungsform entspricht die Anzahl der Spritzformeinheiten der Anzahl der Blasformen am Blasrotor. Jedoch weist jede Spritzformeinheit mehr als nur ein Formnest auf, um trotz des kontinuierlichen Betriebs zu einer Überzahl an Preformen zu kommen, wie sie zur optimalen Nutzung der Ausstoßleistung des Blasrotors zweckmäßig ist. Die Steuerung jeder Spritzgussformeinheit ist baulich einfach und kann die Drehbewegung des Spritzrotors nutzen. In der Transferposition ist das Formnest geöffnet, so dass die fertige Preform mit dem Halsformteil entnommen und transferiert wird, wobei die Preform sich weiter setzen oder entspannen kann, da sie nur in Kontakt mit dem noch temperierten Halsformteil steht und von keinem anderen Manipulationselement kontaktiert wird.

Bei einer zweckmäßigen Ausführungsform umfasst jede Spritzformeinheit drei geteilte Spritzformen, die sternförmig an einer relativ zum Spritzrotor intermittierend drehbaren

Welle angeordnet sind. Jede Spritzform bildet ein Formnest zur Herstellung einer Preform. Die Welle führt bei jeder vollen Umdrehung des Spritzrotors nur eine Teilumdrehung aus, um eine fertige Preform zum Transfer anzubieten. Gleichzeitig ist für eine weitere Preform derselben Spritzformeinheit eine Nachdruckphase gegeben, die für die Qualität der Preform wichtig ist, und ist für eine noch weitere Preform ein zeitlich nicht besonders beschränkter Spritzgießvorgang möglich. Auf diese Weise wird eine gegenseitige Abstimmung zwischen den Spritzzykluszeiten und den Blaszykluszeiten erzielt, derart, dass selbst im kontinuierlichen Ablauf trotz der kürzeren Spritzzykluszeit die volle Ausstoßleistung des Blasrotors nutzbar ist.

Im Spritzrotor ist jeder Spritzformeinheit eine eigene, mit dem Spritzrotor rotierende Plastifizierschnecke zugeordnet. Vorzugsweise ist ferner zumindest ein von der Plastifizierschnecke versorgbarer Spritzzylinder vorgesehen. Hierbei ist es möglich, für jedes Formnest einen Spritzzylinder einzusetzen, oder für die Formnester der Spritzformeinheit einen gemeinsamen Spritzzylinder, der aus der Plastifizierschnecke mit Kunststoff gefüllt wird und eine exakt vorbestimtme Dosis mit hohem Druck in das Formnest bringt. Es liegt eine zweckmäßige Funktionstrennung vor, weil die Plastifizierschnecke für die Zufuhr und den optimalen Plastifizierungsgrad, hingegen der Spritzzylinder für die richtige Dosis und den richtigen Einspritzdruck sorgen.

Im Hinblick auf eine kompakte, niedrige Bauweise liegen die Plastifizierschnecken im Wesentlichen parallel zur Arbeitsebene und radial zur Achse des Spritzrotors. Sie werden zentral aus einem gemeinsamen Materialverteiler mit dem Kunststoffmaterial versorgt.

Bei einer zweckmäßigen Ausführungsform wird jedes Formnest von einer Spritzform mit zwei Formhälften, dem geteilten bzw. zu öffnenden Halsformteil und einem Dorn gebildet. Eine Formhälfte, und vorzugsweise der Dorn, können relativ zu der Welle der Spritzformeinheit fixiert sein, während die andere Formhälfte an der einen Formhälfte oder in einer Formträgerhälfte schwenkgelagert ist. Wie üblich, können dabei Mittel eingesetzt werden, um die Spritzform beim Spritzvorgang zu fixieren oder zu arretieren.

Der mit der Spritz- und Blasformfunktion und der Transfersowie Entnahmefunktion betraute Halsformteil weist zweckmäßig ein Innengewinde auf, um einen Gewindehals zu formen, und vorzugsweise, zumindest eine Ringnut zum Formen eines Behälterhals-Halterings, wie es beispielsweise für PET-Flaschen üblich ist. Allerdings können auch Halsformteile mit anderen Formgebung verwendet werden, abhängig vom Typ des hergestellten Kunststoffbehälters. So sind auch Halsformteile mit glatter Innenwand und/oder Wulstformteilen für andere Verschlüsse verwendbar.

Bei einer zweckmäßigen Ausführungsform trägt der Halsformteil außenseitig und übereinander liegend zwei Führungskonen. Ein oberer Führungskonus ist zum Angriff der Transfer- und Entnahmeelemente vorgesehen, während ein unterer Führungskonus zum Positionieren und Fixieren des Halsformteils im Formnest bzw. in der Blasform dient.

Bei einer besonders zweckmäßigen Ausführungsform der Spritzblasmaschine sind der Transferrotor und der Entnahmerotor übereinander liegend und koaxial in einem einzigen Rotor kombiniert. Dies verringert den Platzbedarf in der Spritzblasmaschine. Ein wichtiger Gesichtspunkt ist hierbei, dass für die Transfer- und die Entnahmeelemente Kurvensteuerungen vorgesehen sind, welche eine wechselweise Überholfunktion für die Transfer- und Entnahmeelemente steuern. Die Transfer- und Entnahmeelemente sind zweckmäßig aus- und einfahrbare und dabei ggfs. schwenkbare Klammerpaare, wobei jede Klammer entweder federvorgespannt ist und sich bei Angriff am jeweiligen Element selbsttätig öffnet und schließt, oder es sich um gesteuert zu öffnende und zu schließende Klammern handelt.

Eine zweckmäßige Ausführungsform der Spritzblasmaschine mit optimalem Ausstoß weist am Blasrotor acht Blasformen auf, am Spritzrotor acht Spritzformeinheiten mit jeweils drei Spritzformen, am Transferrotor vier Transferelemente, und am Entnahmerotor vier Entnahmeelemente. Die Rotoren sind so angetrieben, dass sich das in der Transferposition befindliche Formnest, jede Klammer und jede Blasform in etwa mit der gleichen Umfangsgeschwindigkeit bewegen.

Zusätzlich ist es zweckmäßig, zum Öffnen bzw. Schließen jedes Halsformteils Steuereinrichtungen vorzusehen, vorzugsweise Kurvensteuerungen am Transfer- bzw. im Entnahmerotor. Dabei wird jeder Halsformteil erst dann geöffnet, wenn der fertige Kunststoffbehälter zu entnehmen ist, und dann wieder unmittelbar geschlossen, um ihn das Formnest eingebracht zu werden. Gegebenenfalls wird der Halsformteil sogar in geöffnetem Zustand in das offene Formnest eingebracht und erst mit dem Schließen des Formnests geschlossen.

Um eine saubere Übergabe der fertigen Kunststoffbehälter an einen Abförderer sicherzustellen, ist es zweckmäßig, zum vorübergehenden Sichern und zum Abführen jedes Kunststoffbehälters einen Dorn vorzusehen, der zumindest bereichsweise in den Behälterhals einführbar und darin expandierbar ist, wenn der den Kunststoffbehälter anliefernde Halsformteil geöffnet wird. Es wäre aber auch möglich, den Behälter bodenseitig zu greifen, oder auf andere Weise, sobald der Halsformteil geöffnet wird.

Bei einer günstigen Verfahrensvariante wird jedes Formnest während einer vollen Umdrehung des Spritzrotors aus einer Spritzposition zunächst über eine Dritteldrehung in eine Nachdruckposition gestellt. Es erfolgt dann ein Nachdrücken bzw. Setzen des Kunststoffs im Formnest, um die Preform optimal auszubilden. Das Formnest kann in der Nachdruckposition vorübergehend angehalten werden, muss jedoch nicht. Über die nächste volle Umdrehung des Spritzrotors wird das Formnest über eine Dritteldrehung in eine Transferposition gedreht und geöffnet, derart, dass bei Zusammentreffen mit einem Transferelement die Preform mit dem geschlossenen Halsformteil aus dem Formnest entnommen und zügig zur Blasform transferiert wird. Über die nächste volle Umdrehung des Spritzrotors wird dann das Formnest wieder geschlossen und in die Spritzposition gestellt. In der Spritzposition kann das geschlossene und verriegelte Formnest am sich drehenden Spritzrotor vorübergehend angehalten werden, während sich der Spritzrotor weiterdreht.

Bei einer weiteren Verfahrensvariante wird der jeweilige Halsformteil durch eine Klammer eines kombinierten Transferund Entnahmerotors aus dem Formnest transferiert bzw. aus der Blasform entnommen. Es ist an dem kombinierten Rotor jeweils ein Klammerpaar vorgesehen, wobei das Klammerpaar in Rotordrehrichtung derart gesteuert wird, dass eine in Umlaufrichtung hintere Klammer die andere vordere Klammer des Paares beim Transferieren, und auch beim Entnehmen jeweils einmal überholt, und zwar zwischen den Positionen der Spritzund Blasrotoren. Mit diesem Überhol-Schritt wird beim Transferieren die zunächst voreilende Klammer mit dem Halsformteil und der darin gehaltenen Preform von der leeren Klammer überholt, die den Halsformteil in das Formnest eingebracht hat, damit die leere Klammer dann voreilend den geschlossenen Halsformteil mit dem fertigen Kunststoffbehälter aus der Blasform entnimmt, ehe die dann die nacheilende Klammer mit der Preform die Preform mit dem Halsformteil einbringt. Ähnlich wird zwischen dem Blasrotor und dem Spritzrotor die zunächst voreilende Klammer mit dem Halsformteil und dem Kunststoffbehälter von der leeren Klammer überholt, die die Preform in die Blasform transferierte, damit die dann voreilende leere Klammer wiederum den Halsformteil mit der Preform aus dem Formnest entnimmt, ehe die Klammer mit dem dann des Kunststoffbehälters entledigten Halsformteil diesen in das Formnest einbringt. Die Überholvorgänge sind einfach steuerbar, ermöglichen jedoch die Verwendung eines kombinierten Transfer- und Entnahmerotors anstelle zweier getrennter und getrennt angetriebener und gesteuerter Transfer- und Entnahmerotoren.

Schließlich wird verfahrensgemäß die Spritzformeinheit-Drehung am sich weiterhin drehenden Spritzrotor zumindest in den Spritz- und den Transferpositionen jedes Formnests vorübergehend unterbrochen, damit der Spritzvorgang und der Transfervorgang sauber gesteuert ablaufen. Es ist aber auch denkbar, die Spritzformeinheit-Drehung nur vorübergehend zu verlangsamen, oder sogar kontinuierlich fortzusetzen.

Dem Halsformteil wird zweckmäßig in der Blasform eine noch weitere Funktion zugewiesen, indem er zum Ansetzen der Blasdüse benutzt wird. Das bedeutet, dass die Blasdüse an dem Halsformteil abdichtet, wofür an der Blasdüse und/oder am Halsformteil entsprechende Dichtmaßnahmen vorgesehen sind, und für diese Zweck nicht die Preform benutzt und dabei ggfs. beschädigt wird. Dies bedeutet eine Erhöhung der Flexibilität bei der Blasformung.

Anhand der Zeichnungen werden Ausführungsformen des Erfindungsgegenstandes und des Verfahrens erläutert. Es zeigen:
- Fig. 1: eine Schemadraufsicht auf Rotoren-Komponenten einer Spritzblasmaschine (erste Ausführungsform),
- Fig. 2: eine schematische Draufsicht auf eine Spritzformeinheit eines Spritzrotors der Spritzblasmaschine von Fig. 1 (und Fig. 6),
- Fig. 3: einen Achsschnitt mit einer Teildraufsicht einer Spritzgießform der Spritzformeinheiten der Fig. 1,
- Fig. 4: eine schematische Seitenansicht eines Verfahrensschrittes bei der Entnahme von Kunststoffbehältern aus dem Blasrotor von Fig. 1,
- Fig. 5: eine schematische Seitenansicht eines Details des Spritzrotors in Fig. 1 bzw. Fig. 6,
- Fig. 6: eine Schemadraufsicht auf eine zweite Ausführungsform der Spritzblasmaschine,
- Fig. 7: eine schematische Seitenansicht, teilweise im Schnitt, einer Blasform des Blasrotors in Fig. 1 bzw. Fig. 6, und
- Fig. 8: einen Axialschnitt einer Spritzform mit einem Spritzzylinder und einer Plastifizierschnecke des Spritzrotors in Fig. 1 bzw. Fig. 6.

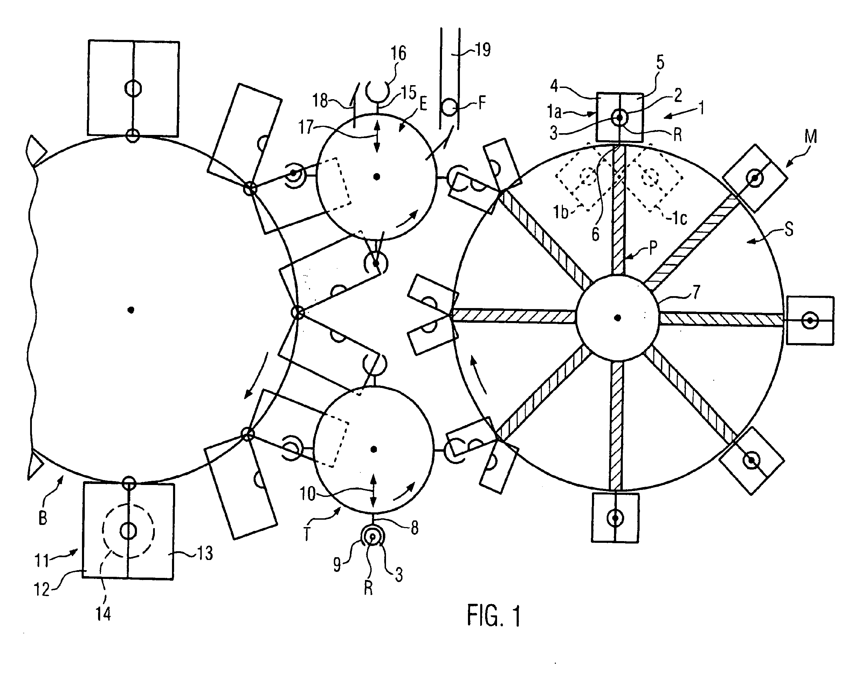

In Fig. 1 werden von einer Spritzblasmaschine M zum Herstellen von Kunststoffbehältern F, insbesondere PET-Flaschen, aus Preforms R ohne detailliertes Eingehen auf Antriebe und Zusatzeinrichtungen ein Spritzrotor S, ein davon beabstandeter Blasrotor B und mit den Rotoren S, B zusammenarbeitende Transfer- und Entnahmerotoren T, E gezeigt. Die Rotoren S, B, T, E arbeiten im Wesentlichen in einer gemeinsamen Arbeitsebene, zu der die Achsen der Rotoren im Wesentlichen senkrecht sind. Am Spritzrotor S sind beispielsweise acht Spritzformeinheiten 1 in gleichmäßigen Umfangsabständen angeordnet. Der Blasrotor B weist ebenfalls acht Blasformen 11 auf. Jeder Transfer- und Entnahmerotor T, E weist vier Transfer- bzw. Entnahmeelemente 8, 9, 15, 16, 18 auf.

Jede Spritzformeinheit 1 umfasst bei der gezeigten Ausführungsform in Fig. 1 drei sternförmig an einer Welle 6 am Spritzrotors S angebrachte Spritzformen 1a, 1b und 1c, deren jede ein Formnest 2 zum Herstellen einer Preform R definiert. Jeder Spritzformeinheit 1 ist eine Plastifizierschnecke P im Spritzrotor S zugeordnet. Die Plastifizierschnecken P rotieren mit dem Spritzrotor und sind liegend und im Wesentlichen radial angeordnet und werden von einem zentralen Materialverteiler 7 versorgt. Jede Spritzform 1a, 1b, 1c ist in einer zur Achse des Spritzrotors S parallelen Ebene geteilt, so dass zwei Formhälften 4, 5 entstehen, die relativ zueinander verschwenkbar sind, gegebenenfalls in einem Formträger. Ein wichtiger Teil des Formnests 2 ist ein geteilter Halsformteil 3, der ebenfalls geteilt ist.

Die Transferelemente 8, 9 am Transferrotor T sind zumindest in Richtung eines Doppelpfeils 10 ausfahrbare bzw. einfahrbare Klammern zum Ergreifen nur des jeweiligen Halsformteils 3. Die Klammern können federvorgespannt sein und sich bei Ansetzen am Halsformteil 3 selbständig öffnen oder schließen, oder sie werden gesteuert geöffnet und geschlossen.

Jede Blasform 11 am Blasrotor B ist ebenfalls geteilt und weist zwei Formhälften 12, 13 sowie eine nur gestrichelt angedeutete Bodenform 14 auf. Jede Blasform 11 arbeitet mit einer in Fig. 1 nicht angedeuteten Blasdüse zusammen.

Die Entnahmeelemente 15, 16 am Entnahmerotor E sind ebenfalls zumindest in Richtung eines Doppelpfeils 17 hin- und herfahrbare Klammern, ähnlich denen am Transferrotor T. Zusätzlich sind Dorne 18 vorgesehen, deren Zweck und Funktion später erläutert wird. Der Entnahmerotor E arbeitet mit einem Abführer 19 (z.B. Entnahmeband oder Lufttransporteur) für die fertigen Kunststoffbehälter F zusammen. Die Drehrichtungen der Rotoren sind durch Pfeile hervorgehoben.

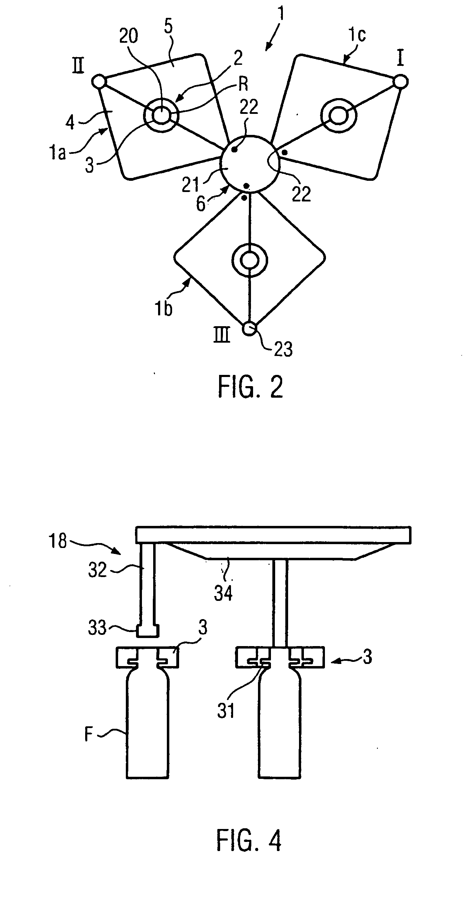

Die drei Spritzformen 1a, 1b, 1c sind mit der Welle 6 in Fig. 1 und 2 jeweils um eine Dritteldrehung relativ zum Spritzrotor S drehbar, während sich der Spritzrotor über eine volle Umdrehung dreht. Auf diese Weise wird jede Spritzform 1a, 1b, 1c über drei volle Umdrehungen des Spritzrotors S zwischen einer Spritzposition I, einer Nachdruckposition II und einer Transferposition III weiter gedreht. Diese Drehung kann kontinuierlich erfolgen oder intermittierend.

Während sich die Rotoren kontinuierlich drehen und im Blasrotor B unter Nutzen der vollen Ausstoßkapazität die einzelnen Kunststoffbehälter F streckgeblasen und ausgeformt werden, wird im Spritzrotor S z.B. eine gegenüber der Anzahl der Blasformen 11 am Blasrotor B größere Anzahl Preforms R hergestellt. Jede Preform R verweilt z.B. länger als eine volle Umdrehung am Spritzrotor S, nämlich z.B. über drei volle Umdrehungen, so dass trotz der wie üblich kürzeren Zykluszeit für das Streckblasen des Kunststoffbehälters F gegenüber der Zykluszeit für das Spritzgießen der Preform die Ausstoßleistung des Blasrotors B nicht durch die längere Zykluszeit für das Spritzgießen der Preforms eingeschränkt wird.

Fig. 2 verdeutlicht die Anordnung der drei Spritzgießformen 1a, 1b, 1c an der Welle 6. In Fig. 2 ist im übrigen angedeutet, dass jede in der Draufsicht annähernd quadratische Spritzform diametral in die Formhälften 4, 5 geteilt sein könnte. Die Welle 6 ist im Spritzrotor S verankert und wird durch eine Steuerung 21 schrittweise oder kontinuierlich im Verhältnis 1:3 zur Umdrehung des Spritzrotors S angetrieben. D.h., bei drei vollen Umdrehungen des Spritzrotors S führt die Spritzformeinheit 1 eine 360° Drehung über drei Drittel-Drehungen durch. Dabei wird jedes Formnest 2 an der Transferposition III geöffnet, so dass die Preform R mit dem geschlossenen Halsformteil 3 zur Entnahme aus dem Formnest 2 bereit ist. Zumindest eine der Formhälften 4, 5 kann fest an der Welle 6 angebracht sein, während die andere Formhälfte an der einen Formhälfte oder an einem nicht gezeigten Formträger schwenkgelagert sein kann. Die Drehsteuerung 21 der Welle 6 kann auch die Öffnungs- und Schließbewegungen der Spritzformen 1a, 1b und 1c steuern.

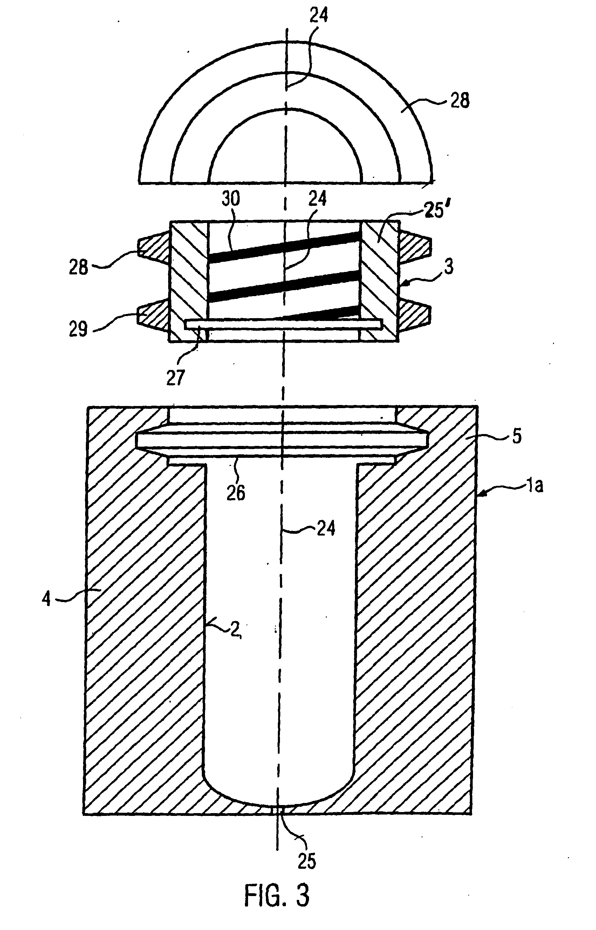

Fig. 3 zeigt einen Schnitt durch die Spritzform 1a senkrecht zur Formteilebene 24. Das Formnest 2 in den Formhälften 4, 5 ist mit der Form der Preform ausgebildet und besitzt unten eine Einspritzöffnung 25. In einem oberen Bereich des Formnestes 2 ist eine umlaufende konische Aufnahme 26 eingeformt, die zum Positionieren und Fixieren des Halsformteils 3 dient. Der Halsformteil 3 ist ebenfalls in der Formteilebene 24 zu öffnen und umfasst zwei Schalen 25, die ein Innengewinde 30 und z.B. eine umlaufende Ringnut 27 (für den Haltering des Behälterhalses) aufweisen. Am Außenumfang der Schalen sind übereinander ein oberer Führungskonus 28 zum Angreifen der Transfer- und Entnahmeelemente, und ein unterer Führungskonus 29 zum Einsetzen in die Nut 26 (und eine entsprechende Nut in der jeweiligen Blasform 11 bzw. in einem Blasformträger) angeformt.

Der Halsformteil 3 dient einerseits zum Ausformen des Mündungsbereiches der Preform R, andererseits zum Ausformen des Kunststoffbehälters F, und zusätzlich zum Transferieren der Preform bzw. Entnehmen des Kunststoffbehälters. Eine weitere Funktion des Halsformteils 3 kann darin bestehen, dass er mit der Blasdüse der Blasform zusammenarbeitet, die direkt an den Halsformteil 3 angesetzt wird.

Fig. 4 zeigt die Vorgangsweise beim Entnehmen der fertigen Kunststoffbehälter F aus dem Blasrotor R. Jeder Kunststoffbehälter F wird mit dem geschlossenen Halsformteil 3 aus der Blasform entnommen und entlang des Entnahmerotors E zum Abförderer 19 gebracht. Bei dieser Bewegung hält das Entnahmeelement 16 den geschlossenen Halsformteil 3, bis der Kunststoffbehälter F mit einem mitlaufenden Dorn 18 ausgerichtet ist, an dessen Schaft 32 unten ein expandierbarer Kopf 33 angeordnet ist. Der Kopf 33 wird durch eine Kurvensteuerung 34 in den Hals des Kunststoffbehälters F eingeführt und expandiert, bis der Kunststoffbehälter F am Dorn 18 hängt. Gleichzeitig wird über nicht näher hervorgehobene Kurvensteuerungen der Halsformteil 3, z.B. durch das Entnahmeelement 16, geöffnet, bis auch der Haltering 31 des Kunststoffbehälters F frei ist und der Kunststoffbehälter abgefördert werden kann. Der Halsformteil 3 wird dann in geöffnetem Zustand weiter bewegt oder wieder geschlossen und dann erneut in ein Formnest 2 einer Spritzgießform 1a, 1b, 1c eingebracht.

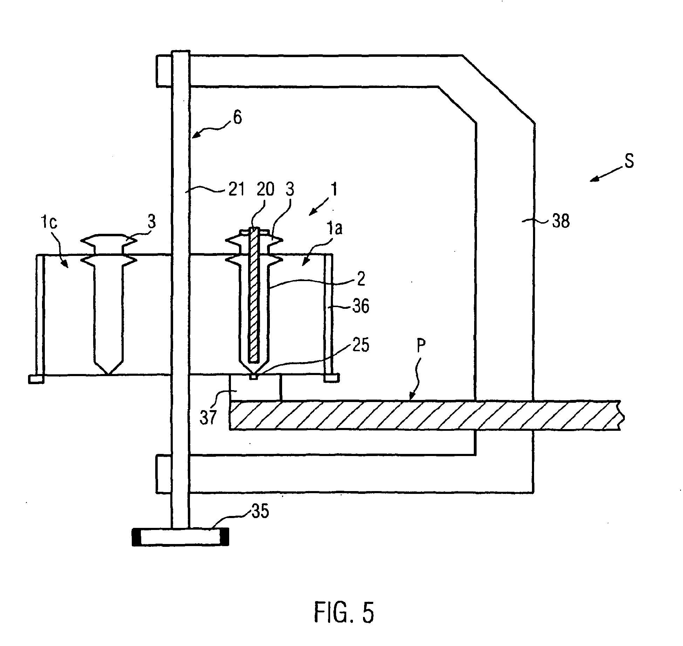

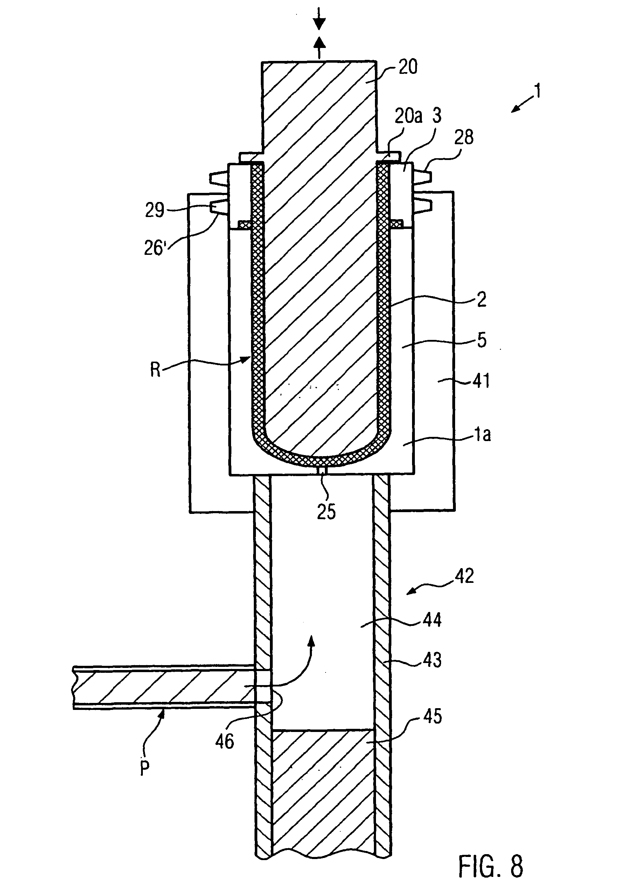

Fig. 5 verdeutlicht ein Detail des Spritzrotors S mit der Welle 6, die in einem Portal 38 drehbar gelagert ist und über ein Steuerungszahnrad 35 drehantreibbar ist. Die Welle 6 trägt Formträger 36 für die Spritzformen 1a, 1b, 1c der Spritzformeinheit 1. Von jeder Spritzform ist der Halsformteil 3 im Formnest 2 gezeigt, und die Einspritzöffnung 25 des Formnestes, die bei der Spritzform 1a mit einem Einspritzelement 37 der Plastifizierschnecke P ausgerichtet ist. Ferner ist von oben durch den Halsformteil 3 ein Dorn 20 eingeschoben. Zur Herstellung der Preform R wird der plastifizierte Kunststoff in das Formnest 2 eingespritzt, entweder aus der Plastifizierschnecke oder durch Verwenden eines anhand der Fig. 8 erläuterten Spritzylinders 42. Die Drehung der Welle 6 kann dabei vorübergehend angehalten sein, während sich der Spritzrotor S jedoch weiter dreht. Der nicht gezeigte Spritzzylinder könnte sich dann zusammen mit der Spritzgießform 1a um die Achse der Welle 6 mitdrehen, bis die Spritzgießform 1a die Nachdruckposition II erreicht hat. Dann wird die Welle 6 weiter gedreht, bis die Spritzgießform 1a schließlich die Transferposition III in Fig. 2 erreicht hat und geöffnet wird.

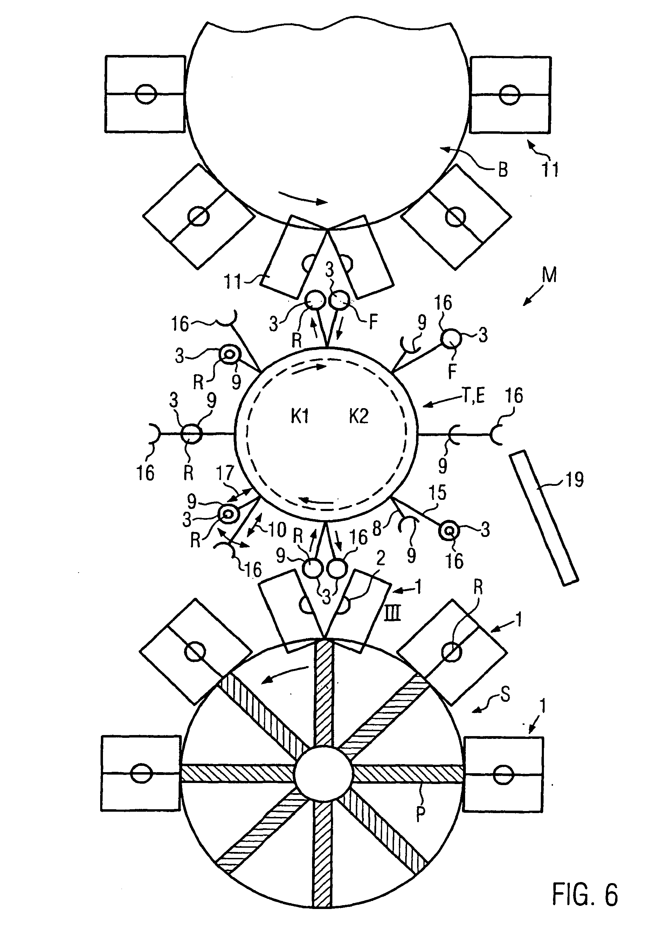

Fig. 6 verdeutlicht analog zu Fig. 1 eine Draufsicht auf eine zweite Ausführungsform der Spritzblasmaschine, die sich dadurch auszeichnet, dass die Transfer- und Entnahmerotoren T, E der Fig. 1 übereinanderliegend in einem Rotor T, E kombiniert sind, der mit insgesamt acht Paaren Transferund Entnahmeelementen 8, 9, 15, 16 und den Dornen 18 (nicht gezeigt) ausgestattet ist, wobei die Transfer- und Entnahmeelemente nicht nur aus- und einfahrbar sind, sondern auch schwenkbeweglich sein können. In dem kombinierten Transfer- und Entnahmerotor sind Kurvensteuerungen K1, K2 vorgesehen, mit denen jeweils eine Überholfunktion durchführbar ist, wenn sich die Elemente vom Spritzrotor S zum Blasrotor B, und umgekehrt, bewegen.

Die Transfer- und Entnahmeelemente 9, 16 sind z.B. je ein Paar Klammern. Bei der Überholfunktion beispielsweise während des Transfers vom Spritzrotor S zum Blasrotor B überholt aufgrund der Funktion der Kurvensteuerung K1 die zunächst in Umlaufrichtung nacheilende Klammer 16 die vorauseilende Klammer 9 einmal, so dass schließlich die Klammer 16 in Umlaufrichtung vor der Klammer 9 bei der geöffneten Blasform 11 ankommt und den fertigen Kunststoffbehälter F mit seinem Halsformteil 3 entnimmt, ehe die dann nacheilende Klammer 9 einen Halsformteil 3 und eine Preform R in die Blasform 11 transferiert.

In ähnlicher Weise steuert die Kurvensteuerung K2 einmal eine Überholfunktion auf dem Entnahmeweg zwischen dem Blasrotor B und dem Spritzrotor S. Die zunächst in Umlaufrichtung nacheilende Klammer 9 überholt die den Halsformteil 3 mit dem Kunststoffbehälter F haltende andere Klammer 16 des Paares, so dass die leere Klammer 9 beim geöffneten Formnest 2 voreilend ankommt, um den Halsformteil 3 mit der Preform R zu entnehmen, ehe die dann des Kunststoffbehälters F entledigte Klammer 16 mit dem Halsformteil 3 beim Formnest 2 ankommt. Jeder Kunststoffbehälter F wird hierbei durch den nicht gezeigten Dorn 18 nach Öffnen des Halsformteils 3 entnommen und dem Abförderer 19 zugeführt. Der Halsformteil 3 wird geschlossen, z.B. durch die Klammer 16, ehe er in die in der Transferposition III befindliche, geöffnete Spritzform, 1a, 1b, le der Spritzformeinheit 1 eingebracht wird.

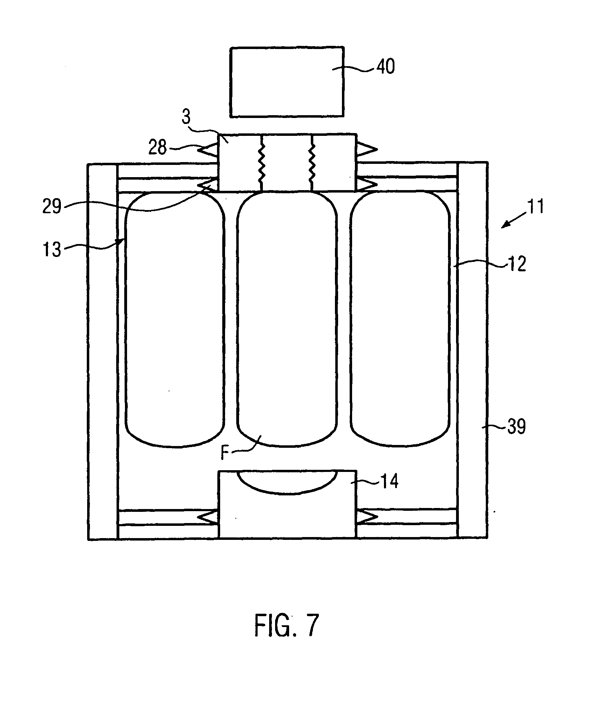

Fig. 7 verdeutlicht schematisch eine Blasform 11 mit einem Blasformträger 39 und den Blasformhälften 12, 13 in geöffnetem Zustand. Auch die Bodenform 14 wird im Formträger 39 positioniert, wie auch der Halsformteil 3 mit dem Führungskonus 29. Die Blasdüse 40 wird direkt an den Halsformteil 3 angesetzt, sobald der Halsformteil 3 geschlossen und verriegelt ist. Hierzu können an der Blasdüse 40 und/oder am Halsformteil 3 entsprechende, nicht näher hervorgehobene Anschluss- und Dichteinrichtungen vorgesehen sein.

Fig. 8 verdeutlicht schließlich nochmals die geschlossene Spritzform 1a der Spritzformeinheit 1 im Spritzrotor S beim Zusammenarbeiten mit der Plastifizierschnecke P und dem Spritzgießzylinder 42, um das Formnest 2 durch die Einspritzöffnung 25 mit plastifiziertem Kunststoff zu füllen und die Preform R herzustellen. Die Formhälften (nur die Formhälfte 5 ist angedeutet) der Spritzform 1a sind in einem Formträger 41 enthalten, mit dem bei dieser Ausführungsform der Führungskonus 29 des Halsformteils 3 zusammenwirkt. Zum Festlegen des Führungskonus 29 ist im Formträger 41 eine entsprechende Aufnahmenut 26' geformt. Der obere Führungskonus 28 für die Transfer- und Entnahmeelemente liegt frei. Der Dorn 20 ist in das Formnest 2 eingeführt, bis ein Ringflansch 20a des Dorns 20 auf der Oberseite des Halsformteils 3 aufsitzt.

Der Einspritzzylinder 42 enthält einen beispielsweise hydraulisch betätigbaren Dosierkolben 45 in einem Zylinderrohr 43, das in den Formträger 41 eingeführt ist und an der Spritzgießform 1a unterseitig abdichtet. Der Dosierkolben 45 ist in eine untere Ladeposition zurückgezogen, ehe die Plastifizierschnecke P durch einen Einlass 46 plastifiziertes Kunststoffmaterial in eine Dosierkammer 44 einbringt. Danach wird der Kolben 45 nach oben verfahren, bis er den Einlass 46 verschließt und eine voreingestellte Dosis in das Formnest 2 presst. Dabei wird vorübergehend der Einlass 46 abgedichtet, bis der Kolben 45 zu einem späteren Zeitpunkt wieder nach unten verfahren wird. Der Spritzzylinder 42 kann bis in die Nachdruckposition II der Spritzform 1a angesetzt bleiben. Dann wird entweder der Formträger 41 etwas angehoben, oder wird der Spritzzylinder 42 etwas abgesenkt, ehe die Spritzgießform 1a um die Welle 6 weitergedreht wird.

Durch den kontinuierlichen Verfahrensablauf ist die Zeitdauer jeweils für jede Preform gleich, bis diese nach ihrer Herstellung in die Blasform eingebracht wird. Die Preform hat eine ausreichend lange Verweildauer im Spritzrotor S, um optimal ausgeformt, nachgedrückt und entspannt zu werden, und um eine optimale Temperatur bzw. Temperaturverteilung in der Preform zu erzielen. Gegebenenfalls wird hierbei oder zu einer späteren Phase gekühlt oder thermisch konditioniert. Eine solche thermische Konditionierung der Preform könnte auch bei der Bewegung entlang des Transferrotors T in die Blasform durchgeführt werden. Die Preform R kommt zu keiner Zeit mit anderen Manipulierelementen in Kontakt, da der Halsformteil 3 nicht nur Formfunktionen beim Spritzgießen und Streckblasen zu erfüllen hat, sondern auch die Transfer- und Entnahmefunktionen, und sogar gegebenenfalls die Anschlussfunktion für die Blasdüse 40 und die Aufsetzfunktion für den Dorn 20. Bei jedem Blasvorgang wird wie üblich nach Beginn gereckt und vorgeblasen, und erst nachher fertig geblasen, während sich der Blasrotor dreht. Zum Öffnen und Schließen der Klammern können Kurvenführungen vorgesehen sein, oder andere Hilfsmittel. Da der Blasrotor und der Spritzrotor im Wesentlichen gleich schnell laufen können, ist auch die Bewegung der Transfer- und Entnahmerotoren gleichmäßig und ruhig. Es könnten zumindest theoretisch acht verschiedene Blasformen eingebaut werden, die unterschiedlich große Kunststoffbehälter herstellen lassen, da jede Blasform sozusagen aus einer eigenen Spritzformeinheit 1 versorgt wird, die die Preform entsprechend den Anforderungen in der Blasform herstellt.

Eine Erhöhung der Variante ist zusätzlich möglich, wenn nicht nur acht verschiedene Blasformer Verwendung finden, sondern auch noch verschiedene Gewindeeinsätze (Halsformteile) zum Einsatz kommen. Insgesamt ist eine wesentlich flexiblere Produktion möglich, da auch eigene (eigenartige) Formen (z.B. eckige Behälter aus eckigen Preforms) hergestellt werden können.

## Patentansprüche

1. Spritzblasmaschine (M) für Kunststoffbehälter, insbesondere Flaschen (F), mit zumindest einem, mehrere jeweils mit plastifiziertem Kunststoff versorgbare Spritzformeinheiten (1) mit einzelnen, geteilten Formestern (2) für Preforms (R) aufweisenden Spritzrotor (S), einem mit gesteuerten Transferelementen (8, 9) bestückten Transferrotor (T) zum Transferieren der einzelnen Preforms (R) an einen mehrere Blasformen (11) zum Streckblasen der Kunststoffbehälter (F) aufweisenden Blasrotor (B), und einem mit gesteuerten Entnahmeelementen (15, 16) bestückten Entnahmerotor (E), wobei die Rotoren (S, T, E, B) im Wesentlichen in einer gemeinsamen Arbeitsebene angeordnet sind, **dadurch gekennzeichnet, dass** jedes Formnest (2) im Spritzrotor (S) zum Teil durch einen geteilten Halsformteil (3) begrenzt ist, der in jede Blasform (11) des Blasrotors (B) passt, dass mit dem jeweiligen Transferelement (8, 9) eine Preform (R) zusammen mit dem Halsformteil (3) im Wesentlichen parallel zur Arbeitsebene aus einem Formnest (2) entnehmbar und in eine Blasform (11) einsetzbar ist, dass mit einem Entnahmeelement (15, 16) ein Behälter (F) mit dem Halsformteil (3) im Wesentlichen parallel zur Arbeitsebene aus der Blasform (11) entnehmbar und der des Behälters (F) entledigte Halsformteil (3) erneut in ein Formnest (2) einsetzbar ist, und dass ein einziger, wie der Blasrotor (B) kontinuierlich drehangetriebener Spritzrotor (S) mit mehr Formnestern (2) als Blasformen (11) am Blasrotor (B) vorgesehen ist.

2. Spritzblasmaschine nach Anspruch 1, **dadurch gekennzeichnet, dass** die Anzahl der jeweils mehr als ein Formnest (2) aufweisenden Spritzformeinheiten (1) am Spritzrotor (S) der Anzahl der Blasformen (11) am Blasrotor (B) entspricht, und dass für jede Spritzformeinheit (1) eine Steuerung vorgesehen ist, mit der jeweils nur ein Formnest (2) relativ zum Spritzrotor (S) zumindest in eine geöffnete Transferposition (III) bewegbar ist.

3. Spritzblasmaschine nach Anspruch 2, **dadurch gekennzeichnet, dass** jede Spritzformeinheit (1) drei geteilte Spritzformen (1a, 1b, 1c) umfasst, die sternförmig an einer relativ zum Spritzrotor (S) intermittierend drehbaren, zur Achse des Spritzrotors (S) im Wesentlichen parallelen Welle (21) angeordnet sind, und dass die Welle (21) bei einer vollen Umdrehung des Spritzrotors (S) zwischen vorbestimmten Positionen (I, II, III) nur über eine Teilumdrehung drehbar ist, vorzugsweise über eine Dritteldrehung, wobei eine Position (I) eine Spritzposition, eine weitere Position (II) eine Nachdruckposition, und eine noch weitere Position (III) die Transferposition ist.

4. Spritzblasmaschine nach Anspruch 1, **dadurch gekennzeichnet, dass** im Spritzrotor (S) jeder Spritzformeinheit (1) eine mitlaufende Plastifizierschnecke (P), und, vorzugweise, zumindest ein von der Plastifizierschnecke (P) versorgbarer Spritzzylinder (42), zugeordnet ist, und dass die Plastifizierschnecken (P) im Wesentlichen parallel zur Arbeitsebene liegen und radial zur Achse des Spritzrotors (S) angeordnet und an einen allen Plastifizierschnecken gemeinsamen Materialverteiler (7) angeschlossen sind.

5. Spritzblasmaschine nach Anspruch 2, **dadurch gekennzeichnet, dass** jedes Formnest (2) von einer Spritzform (1 a) mit zwei Formhälften (4, 5), dem geteilten Halsformteil (3) und einem Dorn (20) gebildet wird, dass eine Formhälfte (4) und, vorzugsweise, der Dorn (20) relativ zu der Welle (21) fixiert sind, und dass die andere Formhälfte (5) direkt an der einen Formhälfte oder in einer Formträgerhälfte (41) schwenkbar ist.

6. Spritzblasmaschine nach Anspruch 2, **dadurch gekennzeichnet, dass** der geteilte Halsformteil (3) ein Innengewinde (24) und, vorzugsweise, eine Ringnut (27) zum Formen eines Behälterhals-Halterings (31) aufweist.

7. Spritzblasmaschine nach Anspruch 1, **dadurch gekennzeichnet, dass** der Halsformteil (3) außenseitig übereinanderliegend zwei Führungskonen (28, 29) trägt, vorzugsweise einen oberen Führungskonus (28) für die Transfer- und Entnahmeelemente (8, 9; 15, 16), und einen unteren Führungskonus (29) für einen eine zum unteren Führungskonus passende konische Führungsnut (26, 26') aufweisenden Spritzformträger (41) bzw. Blasformträger (39).

8. Spritzblasmaschine nach Anspruch 1, **dadurch gekennzeichnet, dass** der Transferrotor (T) und der Entnahmerotor (E) übereinanderliegend und koaxial kombiniert sind, und dass für die Transfer- und die Entnahmeelemente (8, 9, 15, 16), die, vorzugsweise, aus- und einfahrbare und schwenkbare Klammerpaare sind, Kurvensteuerungen (K1, K2) mit integrierter, wechselweiser Überholfunktion der Elemente in Umlaufrichtung vorgesehen sind.

9. Spritzblasmaschine nach Anspruch1, **dadurch gekennzeichnet, dass** am Blasrotor (B) acht Blasformen (11), am Spritzrotor (S) acht Spritzformeinheiten (1) mit jeweils drei Spritzformen (1a, 1b, 1c), am Transferrotor (T) vier Transferelemente, und am Entnahmerotor (E) vier Entnahmeelemente vorgesehen sind.

10. Spritzblasmaschine nach Anspruch 1, **dadurch gekennzeichnet, dass** zum Öffnen bzw. Schließen jedes in geschlossenem Zustand mit der Preform (R) bzw. dem Behälter (F) entnommenen Halsformteils (3) Steuereinrichtungen, vorzugsweise Kurvensteuerungen, am Transfer- bzw. Entnahmerotor (T, E), vorgesehen sind, und dass zum vorübergehenden Sichern und zum Abführen jedes Behälters (F) bei jedem Entnahmeelement (15, 16) ein mit dem Öffnen des Halsformteils (3) expandierbarer, gesteuerter Dorn (18, 32, 33) vorgesehen ist.

11. Verfahren zum Streckblasen von Kunststoffbehältern, insbesondere Flaschen (F), aus Preforms (R) in einer Streckblasmaschine (M), bei dem in wenigstens einem Spritzrotor (S) durch Spritzgießen in Formnestern (2) aufeinanderfolgend einzelne Preforms (R) gebildet und zu einem mehrere Blasformen (11) aufweisenden Blasrotor (B) transferiert werden, **dadurch gekennzeichnet, dass** jede Preform (R) in einem geteilten Halsformteil (3) des Formnests (2) eines einzigen, mehr Formnester (2) als Blasformen (11) am Blasrotor (B) aufweisenden, kontinuierlich drehangetriebenen Spritzrotor (S) hergestellt, im Halsformteil (3) transferiert, und in der Blasform (11) im Halsformteil (3) zum Behälter (F) streckgeblasen wird, wobei der Halsformteil (3) wechselweise in ein Formnest (2) bzw. in eine Blasform (11) eingesetzt wird.

12. Verfahren nach Anspruch 11, **dadurch gekennzeichnet, dass** im Spritzrotor (S) eine größere Anzahl einzelner Preforms (R) als die Anzahl der Blasformen (11) am Blasrotor (B) hergestellt wird, und dass jede Preform (R) vor dem Transfer zum Blasrotor (B) über mehr als eine volle Umdrehung zumindest des Spritzrotors (S) am Spritzrotor verweilt.

13. Verfahren nach Anspruch 12, **dadurch gekennzeichnet, dass** jede jeweils drei Formnester (2) aufweisende Spritzformeinheit (1) während einer vollen Umdrehung des Spritzrotors (S) aus einer Spritzposition (I) zunächst über eine Dritteldrehung in eine Nachdruckposition (II), während der nächsten vollen Umdrehung des Spritzrotors (S) über eine weitere Dritteldrehung in eine Transferposition (III) und während der nächsten vollen Umdrehung des Spritzrotors (S) über eine weitere Dritteldrehung wieder in die Spritzposition (I) gedreht wird.

14. Verfahren nach Anspruch 13, **dadurch gekennzeichnet, dass** jede Preform (R) bzw. jeder Behälter (F) mit dem Halsformteil (3) durch eine Klammer eines kombinierten Transferund Entnahmerotors (T, E) mit gesteuerten Halsformteil-Klammer-Paaren (8, 9; 15, 16) transferiert bzw. entnommen wird, und dass die Klammerpaare in Rotordrehrichtung so gesteuert werden, dass eine in Umlaufrichtung hintere Klammer die andere vordere Klammer des Paares beim Transferieren und beim Entnehmen zwischen den Spritz- und Blasrotoren (S, B) jeweils einmal überholt.

15. Verfahren nach Anspruch 13, **dadurch gekennzeichnet, dass** die Spritzformeinheit-Drehung zumindest in den Spritz- und Transferpositionen (I, II, III) vorübergehend unterbrochen wird.

## Claims

1. Injection blow moulding machine (M) for plastic containers, in particular bottles (F), comprising at least one injection moulding rotor (S) having a plurality of injection moulding units (1) which are suppliable with plasticised plastic materials and which include individual and split mould cavities (2) for preforms (R), a transfer rotor (T) equipped with controlled transfer elements (8, 9) for transferring the individual preforms (R) to a blow moulding rotor (B) which includes a plurality of blow moulds (11) for stretch blow moulding the plastic containers (F), and a removal rotor (E) equipped with controlled removal elements (15, 16), the rotors (S, T, E, B) being arranged in an essentially common operating plane, **characterised in that** each mould cavity (2) in the injection moulding rotor (S) is partly bounded by a split neck moulding part (3) fitting into each blow mould (11) of the blow moulding rotor (B), that a preform (R) together with the split neck moulding part (3) are to be removed by the respective transfer element (8, 9) from a mould cavity (2) substantially parallel to the operating plane and are to be introduced into a blow mould (11), that a container (F) together with the split neck moulding part (3) are to be removed from the blow mould (11) by a removal element (15, 16) substantially parallel to the operating plane, that a respective split neck moulding part (3) which then no longer contains a container (F) is to be introduced again into a mould cavity (2), and that a single injection moulding rotor (S) is provided which is continuously rotatingly driven as well as the blow moulding rotor (B) and which includes a number of mould cavities (2) exceeding the number of blow moulds (11) on the blow moulding rotor (B):

2. Injection blow moulding machine according to claim 1, **characterised in that** the number of injection moulding units (1) on the injection moulding rotor (S), each of which comprises more than one mould cavity (2), corresponds to the number of blow moulds (11) on the blow moulding rotor (B), and that a control means is provided for each injection moulding unit (1) by which control means only one mould cavity (2) at a time can be moved relative to the injection moulding rotor (S) into an open transfer position (III).

3. Injection blow moulding machine according to claim 2, **characterised in that** each injection moulding unit (1) comprises three split injection moulds (1 a, 1b, 1 c) provided in a star-shaped configuration on a shaft (21) which extends substantially parallel to the axis of the injection moulding rotor (S) and which is adapted to be intermittently rotated relative to the injection moulding rotor (S), and that, when the injection moulding rotor (S) executes a full rotation between predetermined positions (I, II, III) the shaft (21) is adapted to execute only a part of a full rotation, preferably one-third of a full rotation, and that among the positions (I, II; III) one position (I) is an injection position, a further position (II) is a holding pressure position, and a further position (III) is a transfer position.

4. Injection blow moulding machine according to claim 1, **characterised in that** a plasticising auger (P), and preferably, at least one injection moulding cylinder (42) is associated in the injection moulding rotor (S) to each injection moulding unit (1), that the plasticising auger (P) is rotating with the injection moulding rotor (S), and that the plasticising augers (P) lie substantially parallel to the operating plane, are arranged radial to the axis of the injection moulding rotor (S) and are connected to a material manifold (7) which is common to all plasticising augers (P).

5. Injection blow moulding machine according to claim 2, **characterised in that** each mould cavity (2) is constituted by an injection mould (1a) having two mould halves (4, 5), the split neck moulding part (3), and a mandrel (20), that one mould half (4), and, preferably, the mandrel (20) are fixed relative to the shaft (21), and that the other mould half (5) is pivotably arranged directly at the one mould half (4) or in a mould carrier half (41).

6. Injection blow moulding machine according to claim 2, **characterised in that** the split neck moulding part (3) comprises a female thread (24) and, preferably, an annular groove (27) for moulding a container neck holding ring (31).

7. Injection blow moulding machine according to claim 1, **characterised in that** the split neck moulding part (3) carries two guide cones (28, 29) which are arranged one on top of the other on the outer side of the split neck moulding part (3), preferably carries an upper guide cone (28) for the transfer and removal elements (8, 9; 15, 16), and a lower guide cone (21) for an injection mould carrier (41) or a blow mould carrier (39) provided with a conical guiding groove (26, 26') matching with the lower guide cone (29).

8. Injection blow moulding machine according to claim 1, **characterised in that** the transfer rotor (T) and the removal rotor (E) are coaxially combined such that they are positioned one on top of the other, and that cam control means (K1, K2) are provided for the transfer and removal elements (8, 9; 15, 16), which, preferably, are constituted by pairs of clamps which are extendable and retractable as well as pivotable, the cam control means (K1, K2) having an integrated alternate overtaking function in the direction of circulation of the elements (8, 9; 15, 16).

9. Injection blow moulding machine according to claim 1, **characterised in that** eight blow moulds (11) are provided on the blow moulding rotor (B), that eight injection moulding units (1) each comprising three respective injection moulds (1a, 1b, 1 c) are provided on the injection moulding rotor (S), that four transfer elements are provided on the transfer rotor (T), and that four removal elements are provided on the removal rotor (E).

10. Injection blow moulding machine according to claim 1, **characterised in that** control means, preferably cam control means, are provided on the transfer rotor and the removal rotor (T, E) for opening and closing each split neck moulding part (3) which has been removed in a closed condition either with a preform (R) or with a container (F), and that for temporarily securing and transporting away each container (F) a controlled mandrel (18, 32, 32) is arranged at each removal element (15, 16) which controlled mandrel is expandable when the split neck moulding part is being opened.

11. Method for stretch blow moulding plastic containers, in particular bottles (F), from preforms (R) in a stretch blow moulding machine (M), according to which method individual preforms (R) are moulded successively by injection moulding in mould cavities (2) of at least one injection moulding rotor (S), which preforms (R) then are transferred to a blow moulding rotor (B) having a plurality of blow moulds (11), **characterised in that** each preform (R) is produced in a split neck moulding part (3) of the mould cavity (2) of a single continuously rotatingly driven injection moulding rotor (S) having more mould cavities (2) than blow moulds (11) are provided at the blow moulding rotor (B), that each preform (R) is transferred in the split neck moulding part (3) and is stretch blow moulded to a container (F) within the split neck mould part (3), the split neck moulding part (3) being alternately inserted into a mould cavity (2) or in a blow mould (11).

12. Method according to claim 11, **characterised in that** the number of individual preforms (R) produced in the injection moulding rotor (S) exceeds the number of blow moulds (11) provided on the blow moulding rotor (B), and that, prior to being transferred to the blow moulding rotor (B), each preform (R) dwells on the injection moulding rotor (S) for a time period corresponding to more than one full rotation of at least the injection moulding rotor (S).

13. Method according to claim 12, **characterised in that** during a full rotation of the injection moulding rotor (S) each injection moulding unit (1) which comprises three mould cavities (2) is rotated from an injection position (I) first by a third of a full rotation to a holding pressure position (II), is rotated during the next full rotation of the injection moulding rotor (S) by another third of a full rotation to a transfer position (III), and is rotated during the next full rotation of the injection moulding rotor (S) by another third of a full rotation again into the injection position (I).

14. Method according to claim 13, **characterised In that** each preform (R) or each container (F) is transferred and removed together with the split neck mould part (3) by a clamp of a combined transfer and removal rotor (T, E) having controlled pairs of neck mould part clamps (8, 9; 15, 16), and that the pairs of clamps are controlled such that in rotor rotating direction a clamp of the pair being a rear clamp overtakes in rotation direction once the other respective leading clamp of the pair during the clamp travel between the injection and blow mould rotors (S, B) and while transferring and removing a preform (R) or a container (F).

15. Method according to claim 13, **characterised in that** at least at the injection and transfer positions (I, II, III) the rotation of the injection moulding unit (1) is temporarily interrupted.

## Revendications

1. Machine d'injection-soufflage (M) pour récipients en matière plastique, en particulier pour des bouteilles (F), avec au moins un rotor d'injection (S) qui comporte plusieurs unités de moulage par injection (1) aptes à être alimentées chacune en matière plastique plastifiée et pourvues de cavités de moulage individuelles divisées (2) pour des préformes (R), un rotor de transfert (T) qui est équipé d'éléments de transfert (8, 9) commandés et qui est destiné à transférer les préformes (R) individuelles vers un rotor de soufflage (B) comportant plusieurs moules de soufflage (11) pour l'étirage-soufflage des récipients en matière plastique (F), et un rotor d'enlèvement (E) qui est équipé d'éléments d'enlèvement (15, 16) commandés, les rotors (S, T, E, B) étant disposés globalement dans un plan de travail commun, **caractérisée en ce que** chaque cavité de moulage (2) prévue dans le rotor d'injection (S) est délimitée en partie par une partie de moulage de goulot divisée (3) qui est adaptée à chaque moule de soufflage (11) du rotor de soufflage (B), **en ce qu'**à l'aide de l'élément de transfert (8, 9) correspondant, une préforme (R) est apte à être enlevée, avec la partie de moulage de goulot (3), d'une cavité de moulage (2), globalement parallèlement au plan de travail, et est apte à être introduite dans un moule de soufflage (11), **en ce qu'**à l'aide d'un élément d'enlèvement (15, 16) un récipient (F) est apte à être enlevé du moule de soufflage (11) avec ladite partie de moulage de goulot (3), globalement parallèlement au plan de travail, et la partie de moulage de goulot (3) débarrassée du récipient (F) est apte à être remise dans une cavité de moulage (2), et **en ce qu'**un seul rotor d'injection (S) entraîné en rotation en continu comme le rotor de soufflage (B), est pourvu de plus de cavités de moulage (2) qu'il n'y a de moules de soufflage (11) sur le rotor de soufflage (B).

2. Machine d'injection-soufflage selon la revendication 1, **caractérisée en ce que** le nombre d'unités de moulage par injection (1) prévues sur le rotor d'injection (S) et présentant chacune plus d'une cavité de moulage (2) correspond au nombre de moules de soufflage (11) prévus sur le rotor de soufflage (B), et **en ce qu'**il est prévu pour chaque unité de moulage par injection (1) une commande avec laquelle une seule cavité de moulage (2) est apte à être déplacée à chaque fois par rapport au rotor d'injection (S) au moins jusqu'à une position de transfert ouverte (III).

3. Machine d'injection-soufflage selon la revendication 2, **caractérisée en ce que** chaque unité de moulage par injection (1) comprend trois moules à injection divisés (1a, 1b, 1c) qui sont disposés en étoile sur un arbre (21) entraîné en rotation par intermittence par rapport au rotor d'injection (S) et globalement parallèle à l'axe du rotor d'injection (S), et **en ce que** l'arbre (21), lors d'un tour complet du rotor (S), est apte à décrire un tour partiel seulement, de préférence un tiers de tours, entre des positions prédéfinies (I, II, III), une position (I) étant constituée par une position d'injection, une autre position (II) par une position de maintien en pression et encore une autre position (III) par la position de transfert.

4. Machine d'injection-soufflage selon la revendication 1, **caractérisée en ce que** dans le rotor d'injection (S), une vis de plastification entraînée (P) et de préférence au moins un cylindre d'injection (42) apte à être alimenté par la vis de plastification (P) sont associés à chaque unité de moulage par injection (1), et **en ce que** les vis de plastification (P) sont globalement parallèles au plan de travail, sont disposées radialement par rapport à l'axe du rotor d'injection (S) et sont raccordées à un répartiteur de matière (7) commun à toutes les vis de plastification.

5. Machine d'injection-soufflage selon la revendication 2, **caractérisée en ce que** chaque cavité de moulage (2) est formée par un moule à injection (1a) avec deux moitiés de moule (4, 5), la partie de moulage de goulot divisée (3) et un mandrin (20), **en ce qu'**une moitié de moule (4) et de préférence le mandrin (20) sont fixés par rapport à l'arbre (21), et **en ce que** l'autre moitié de moule (5) est apte à pivoter directement sur une moitié de moule ou dans une moitié de support de moule (41).

6. Machine d'injection-soufflage selon la revendication 2, **caractérisée en ce que** la partie de moulage de goulot divisée (3) présente un filetage intérieur (24) et de préférence une rainure annulaire (27) pour former une bague de retenue (31) du goulot du récipient.

7. Machine d'injection-soufflage selon la revendication 1, **caractérisée en ce que** la partie de moulage de goulot (3) porte sur son côté extérieur deux cônes de guidage (28, 29) l'un sur l'autre, de préférence un cône de guidage supérieur (28) pour les éléments de transfert et les éléments d'enlèvement (8, 9 ; 15, 16) et un cône de guidage inférieur (29) pour un support de moule à injection (41) ou un support de moule de soufflage (39) pourvu d'une rainure de guidage conique (26, 26') correspondant au cône de guidage inférieur.

8. Machine d'injection-soufflage selon la revendication 1, **caractérisée en ce que** le rotor de transfert (T) et le rotor d'enlèvement (E) sont combinés l'un sur l'autre et coaxialement, et **en ce que** pour les éléments de transfert et les éléments d'enlèvement (8, 9, 15, 16), qui sont constitués de préférence par des paires de pinces aptes à être déployées et rétractées et pivotantes, il est prévu des commandes à came (K1, K2) avec une fonction intégrée de dépassement alterné des éléments dans le sens circonférentiel.

9. Machine d'injection-soufflage selon la revendication 1, **caractérisée en ce qu'**il est prévu sur le rotor de soufflage (B) huit moules de soufflage (11), sur le rotor d'injection (S) huit unités de moulage par injection (1) avec chacune trois moules à injection (1a, 1b, 1c), sur le rotor de transfert (T) quatre éléments de transfert, et sur le rotor d'enlèvement (E) quatre éléments d'enlèvement.

10. Machine d'injection-soufflage selon la revendication 1, **caractérisée en ce que** pour l'ouverture et la fermeture de chaque partie de moulage de goulot (3) enlevée en position fermée avec la préforme (R) ou le récipient (F), il est prévu des dispositifs de commande, de préférence des commandes à came, sur les rotors de transfert et d'enlèvement (T, E), et **en ce que** pour immobiliser temporairement et évacuer chaque récipient (F), il est prévu sur chaque élément d'enlèvement (15, 16) un mandrin commandé (18, 32, 33) extensible avec l'ouverture de la partie de moulage de goulot (3).

11. Procédé de soufflage-étirage de récipients en matière plastique, en particulier de bouteilles (F) à partir de préformes (R) dans une machine de soufflage-étirage (M), selon lequel dans au moins un rotor d'injection (S), des préformes individuelles (R) sont formées successivement par moulage par injection dans des cavités de moulage (2) et sont transférées vers un rotor de soufflage (B) comportant plusieurs moules de soufflage (11), **caractérisé en ce que** chaque préforme (R) est fabriquée dans une partie de moulage de goulot divisée (3) de la cavité de moulage (2) d'un seul rotor d'injection (S) qui est entraîné en rotation en continu et qui comporte plus de cavités de moulage (2) qu'il n'y a de moules de soufflage (11) sur le rotor de soufflage (B), est transférée dans la partie de moulage de goulot (3) et est étirée par soufflage dans le moule de soufflage (11), dans la partie de moulage de goulot (3), pour former le récipient (F), ladite partie de moulage de goulot (3) étant introduite en alternance dans une cavité de moulage (2) et dans un moule de soufflage (11).

12. Procédé selon la revendication 11, **caractérisé en ce que** dans le rotor d'injection (S) est fabriqué un nombre de préformes individuelles (R) supérieur au nombre de moules de soufflage (1) prévus sur le rotor de soufflage (B), et **en ce que** chaque préforme (R), avant son transfert vers le rotor de soufflage (B), reste sur le rotor d'injection (S) pendant plus d'un tour complet dudit rotor d'injection (S), au moins.

13. Procédé selon la revendication 12, **caractérisé en ce que** pendant un tour complet du rotor d'injection (S), chaque unité de moulage par injection (1) comportant au moins trois cavités de moulage (2) tourne tout d'abord d'un tiers de tour à partir d'une position d'injection (I) jusqu'à une position de maintien en pression (II), puis pendant le tour complet suivant du rotor d'injection (S) tourne encore d'un tiers de tour jusqu'à une position de transfert (III), et pendant le tour complet suivant du rotor d'injection (S) tourne encore d'un tiers de tour pour revenir à la position d'injection (I).

14. Procédé selon la revendication 13, **caractérisé en ce que** chaque préforme (R) et chaque récipient (F) sont respectivement transférée et évacué avec la partie de moulage de goulot (3) par une pince d'un rotor de transfert et d'enlèvement combiné (T, E) pourvu de paires de pinces pour partie de moulage de goulot (8, 9 ; 15, 16) commandées, et **en ce que** les paires de pinces sont commandées dans le sens de rotation du rotor de telle sorte qu'une pince située derrière, dans le sens circonférentiel, dépasse à chaque fois l'autre pince, située devant, de la paire lors du transfert et de l'enlèvement entre les rotors d'injection et de soufflage (S, B).

15. Procédé selon la revendication 13, **caractérisé en ce que** la rotation des unités de moulage par injection est interrompue temporairement au moins dans les positions d'injection et de transfert (I, II, III).
